(19) Europäisches Patentamt European Patent Office Office européen des brevets

(11) EP 4 576 072 A1

(12) EUROPEAN PATENT APPLICATION

(43) Date of publication:
25.06.2025 Bulletin 2025/26

(21) Application number: 24164431.9

(22) Date of filing: 19.03.2024

(51) International Patent Classification (IPC):
G10L 19/008 (2013.01)    H04S 1/00 (2006.01)
H04S 3/00 (2006.01)    H04S 7/00 (2006.01)
G06N 3/02 (2006.01)

(52) Cooperative Patent Classification (CPC):
G10L 19/008; G06N 3/045; H04S 1/007;
H04S 3/008; H04S 7/30; G06N 3/02

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.12.2023 EP 23218098

(71) Applicant: Koninklijke Philips N.V.
5656 AG Eindhoven (NL)

(72) Inventors:
• KECHICHIAN, Patrick
  Eindhoven (NL)
• SCHUIJERS, Erik Gosuinus Petrus
  Eindhoven (NL)
• RAVI, Akshaya
  Eindhoven (NL)

(74) Representative: Philips Intellectual Property &
Standards
High Tech Campus 52
5656 AG Eindhoven (NL)

(54) **GENERATION OF MULTICHANNEL AUDIO SIGNAL**

(57) An apparatus comprises a receiver (101) arranged to receive a frequency domain audio signal and a time domain audio signal being representations of a downmix of a multichannel audio signal. A decorrelator (107) generates a frequency domain decorrelated signal of the downmix. An envelope compensator (109) generates a compensated frequency domain decorrelated signal by applying a time domain envelope compensation to the decorrelated signal to reduce a difference between the envelope of the time domain audio signal and the time domain envelope of the frequency domain decorrelated signal. The envelope compensator (109) comprises a trained artificial neural network having input values determined from the time domain audio signal and from the frequency domain decorrelated signal and which generates values of the envelope compensated frequency domain decorrelated signal. An output generator (105) generates the multichannel audio signal by upmixing from the frequency domain audio signal and the frequency domain decorrelated signal.

**FIG. 1**

**Description**

FIELD OF THE INVENTION

The invention relates to generation of multichannel audio signals and in particular, but not exclusively, to generation of stereo signals from upmixing of a mono downmix signal.

BACKGROUND OF THE INVENTION

Spatial audio applications have become numerous and widespread and increasingly form at least part of many audiovisual experiences. Indeed, new and improved spatial experiences and applications are continuously being developed which results in increased demands on the audio processing and rendering.

For example, in recent years, Virtual Reality (VR) and Augmented Reality (AR) have received increasing interest, and a number of implementations and applications are reaching the consumer market. Indeed, equipment is being developed for both rendering the experience as well as for capturing or recording suitable data for such applications. For example, relatively low-cost equipment is being developed for allowing gaming consoles to provide a full VR experience. It is expected that this trend will continue and indeed will increase in speed with the market for VR and AR reaching a substantial size within a short time scale. In the audio domain, a prominent field explores the reproduction and synthesis of realistic and natural spatial audio. The ideal aim is to produce natural audio sources such that the user cannot recognize the difference between a synthetic or an original one.

A lot of research and development effort has focused on providing efficient and high-quality audio encoding and audio decoding for spatial audio. A frequently used spatial audio representation is multichannel audio representations, including stereo representation, and efficient encoding of such multichannel audio based on downmixing multichannel audio signals to downmix channels with fewer channels have been developed. One of the main advances in low bit-rate audio coding has been the use of parametric multichannel coding where a downmix signal is generated together with parametric data that can be used to upmix the downmix signal to recreate the multichannel audio signal.

In particular, instead of traditional mid-side or intensity coding, parametric multichannel audio coding uses a downmix of a multichannel input signal to a lower number of channels (e.g. two to one) and multichannel image (stereo) parameters are extracted. Then the downmix signal is encoded using a more traditional audio coder (e.g. a mono audio encoder). The data of the downmix is combined with the encoded multichannel parameter data to generate a suitable audio bitstream. This bitstream is then transmitted to the decoder, where the process is inverted. First the downmix audio signal is decoded, after which the multichannel audio signal is reconstructed guided by the encoded multichannel image upmix parameters.

An example of stereo coding is described in E. Schuijers, W. Oomen, B. den Brinker, J. Breebaart, "Advances in Parametric Coding for High-Quality Audio", 114th AES Convention, Amsterdam, The Netherlands, 2003, Preprint 5852. In the described approach, the downmixed mono signal is parametrized by exploiting the natural separation of the signal into three components (objects): transients, sinusoids, and noise. In E. Schuijers, J. Breebaart, H. Pumhagen, J. Engdegård, "Low Complexity Parametric Stereo Coding", 116th AES, Berlin, Germany, 2004, Preprint 6073 more details are provided describing how parametric stereo was realized with a low (decoder) complexity when combining it with Spectral Band Replication (SBR).

In the described approaches, the decoding side multi-channel regeneration is based on the use of a so-called de-correlation process. The de-correlation process generates a decorrelated helper signal from the downmix signal, i.e. from the monaural signal of parametric stereo. The decorrelated signal is in particular used to control and reconstruct the coherence (stereo width in case of stereo) between/among the different channels during the upmix process. In the stereo reconstruction process, both the monaural signal and the decorrelated helper signal are used to generate the upmixed stereo signal based on the upmix parameters. Specifically, the two signals may be multiplied by a time- and frequency-dependent 2x2 matrix having coefficients determined from the upmix parameters to provide the output stereo signal.

However, although Parametric Stereo (PS) and similar downmix encoding/ decoding approaches were a leap forward from traditional stereo and multichannel coding, the approach is not optimal in all scenarios. In particular, known approaches tend to introduce some distortion, changes, artefacts etc. that may introduce differences between the (original) multichannel audio signal input to the encoder and the multichannel audio signal recreated at the decoder. Typically, the audio quality may be degraded and imperfect recreation of the multichannel occurs. Further, the data rate may still be higher than desired and/or the complexity/ resource usage of the involved processing may be higher than preferred. In particular, it is challenging to generate a decorrelated helper signal that results in optimum audio quality of the upmixed multichannel signal. For example, it is known that the decorrelation process often times smears out transients over time and may introduce additional artifacts such as post-echoes due to the filter characteristics of the decorrelator.

Hence, an improved approach would be advantageous. In particular, an approach allowing increased flexibility, improved adaptability, an improved performance, increased audio quality, improved audio quality to data rate trade-off, reduced complexity and/or resource usage, reduced computational load, facilitated implementation and/or an improved spatial audio experience would be advantageous.

## SUMMARY OF THE INVENTION

Accordingly, the invention seeks to preferably mitigate, alleviate or eliminate one or more of the above mentioned disadvantages singly or in any combination.

According to an aspect of the invention there is provided an apparatus for generating an output multichannel audio signal, the apparatus comprising: a receiver arranged to receive a frequency domain audio signal and a time domain audio signal, the frequency domain audio signal being a frequency domain representation of a downmix of a multichannel audio signal and the time domain audio signal being a time domain representation of the downmix of the multichannel audio signal; a decorrelator arranged to generate a frequency domain decorrelated signal by applying a decorrelation to the frequency domain audio signal; an envelope compensator arranged to generate an envelope compensated frequency domain decorrelated signal by applying a time domain envelope compensation to the frequency domain decorrelated signal, the time domain envelope compensation reducing a difference between a time domain envelope of the downmix of a multichannel audio signal and a time domain envelope of the frequency domain decorrelated signal, the envelope compensator comprising a trained artificial neural network having input values determined from the time domain audio signal and from the frequency domain decorrelated signal and generating values of the envelope compensated frequency domain decorrelated signal; and an output generator arranged to generate the output multichannel audio signal by upmixing from the frequency domain audio signal and the envelope compensated frequency domain decorrelated signal.

The approach may provide an improved audio experience in many embodiments. For many signals and scenarios, the approach may provide improved generation/ reconstruction of a multichannel audio signal with an improved perceived audio quality. The approach may provide a particularly advantageous arrangement which may in many embodiments and scenarios allow a facilitated and/or improved possibility of utilizing artificial neural networks in audio processing, including typically audio encoding and/or decoding. The approach may allow an advantageous employment of artificial neural network(s) in generating a multichannel audio signal from a downmix audio signal.

The approach may provide an efficient implementation and may in many embodiments allow a reduced complexity and/or resource usage.

The approach may provide a particularly efficient and high performance approach for improving and increasing the correspondence of properties between the received audio signal and an auxiliary (frequency domain) decorrelated signal used to generate the multichannel audio signal. In particular, the approach may effectively mitigate and reduce the impact of generated decorrelated signals not having ideal temporal properties, including in particular errors or deviations in the signal level or the temporal envelope of the decorrelated signal.

The downmix of a multichannel audio signal, and thus the frequency domain audio signal and the time domain audio signal, may in many embodiments be a mono audio signal and/or the multichannel audio signcompenal may be a stereo audio signal. The receiver may in many embodiments further receive upmix parameters and the upmixing may be in dependence on the upmix parameters.

The upmix parametric data may comprise parameter (values) relating properties of the downmix signal to properties of the multichannel audio signal. The upmix parametric data may comprise data being indicative of relative properties between channels of the multichannel audio signal. The upmix parametric data may comprise data being indicative of differences in properties between channels of the multichannel audio signal. The upmix parametric data may comprise data being perceptually relevant for the synthesis of the multichannel audio signal. The properties may for example be differences in phase and/or intensity and/or timing and/or correlation. The upmix parametric data may in some embodiments and scenarios represent abstract properties not directly understandable by a human person/expert (but may typically facilitate a better reconstruction/lower data rate etc.). The upmix parametric data may comprise data including at least one of interchannel intensity differences, interchannel timing differences, interchannel correlations and/or interchannel phase differences for channels of the multichannel audio signal.

The artificial neural network(s) may be a trained artificial neural network(s) trained by training data including training downmix audio signals and training upmix parametric data generated from training multichannel audio signals; the training employing a cost function comparing the training multichannel audio signals to upmixed multi-channel signals generated by the audio apparatus from the training downmix signals and from the envelope compensated frequency domain decorrelated signal. The artificial neural network(s) may be a trained artificial neural network(s) trained by training data including training data representing a range of relevant audio sources including recording of videos, movies, telecommunications, etc.

The artificial neural network(s) may be a trained artificial neural network(s) trained by training data having training input data comprising training audio signals, and using a cost function including a contribution indicative of a difference between generated multichannel audio signals and training input multichannel audio signal, and/or a cost function indicative of a difference between time domain envelope properties for the time domain audio signal and the compensated frequency domain decorrelated signal.

The generator may be arranged to generate the multichannel audio signal by applying a matrix multiplication to the compensated frequency domain decorrelated signal and the frequency domain audio signal with the coefficients of the matrix being determined as a function of parameters of the upmix parametric data. The matrix may be time- and frequency-dependent.

The audio apparatus may specifically be an audio decoder apparatus.

In some embodiments the audio apparatus may be arranged to receive the time domain audio signal and from this generate the frequency domain audio signal. For example, the audio apparatus may comprise a time to frequency transform such as a QMF or other filter bank. As a specific example, the audio apparatus may include a bitstream receiver for receiving a bitstream comprising a time domain audio signal, and specifically a mono-signal, which it may extract and transform to the frequency domain to generate the frequency domain audio signal which may then together with the time domain audio signal be forwarded to the receiver. The bitstream receiver may receive further data in the bitstream, such as the upmix data, positional information, acoustic environment data etc.

In some embodiments the audio apparatus may be arranged to receive the frequency domain audio signal and from this generate the time domain audio signal.

The trained artificial neural network may comprise input nodes receiving samples of the time domain audio signal and/or data values/features derived therefrom. The trained artificial neural network may comprise input nodes receiving samples of the frequency domain decorrelated signal and/or data values/features derived therefrom.

The artificial neural network may be trained to reduce the difference between the time domain envelope of the downmix of a multichannel audio signal and the (equivalent) time domain envelope of the compensated frequency domain decorrelated signal (as e.g. determined by converting the compensated frequency domain decorrelated signal to the time domain and determining the envelope of the resulting time domain signal).

The trained artificial neural network may comprise output nodes generating samples of the compensated frequency domain decorrelated signal.

According to an optional feature of the invention, the trained artificial neural network comprises a first neural network section arranged to receive input values determined from the time domain audio signal and to generate a set of feature values; and a second neural network section arranged to receive the set of feature values and input values determined from the frequency domain decorrelated audio signal.

This may provide a particularly efficient and high performance operation in many scenarios, and may typically result in substantially improved audio quality of the generated output multichannel audio signal. The approach may in particular allow an overall structure that is particularly adapted to effectively provide an improved decorrelated signal resulting in an improved audio quality while allowing low complexity and resource usage.

In many embodiments, the trained artificial neural network comprises a first neural network section arranged to receive input values determined from the time domain audio signal and to generate a set of feature values; and a second neural network section arranged to receive the input values determined from the frequency domain decorrelated audio signal and to generate values of the envelope compensated frequency domain decorrelated signal in dependence on the set of feature values.

The envelope compensator may be arranged to condition/adapt values of neurons of the second neural network section dependent on the set of feature values. The second neural network section may have an input for receiving the set of feature values.

The first neural network section may not receive any input values determined from the frequency domain decorrelated audio signal, and specifically may not receive any samples/values of the frequency domain decorrelated audio signal. The first neural network section may receive only time domain audio signal samples. The first neural network section may operate on time domain values/ in the time domain.

The second neural network section may not receive any input values determined from the time domain audio signal, and specifically may not receive any samples of the time domain audio signal. The second neural network section may receive only the set of feature values and samples/values of the decorrelated frequency domain audio signal. The second section may be arranged to operate on frequency domain values/in the frequency domain.

The trained artificial neural network may comprise a time domain network which receives inputs from the time domain signal and which generates feature values. The trained artificial neural network may comprise a frequency domain network receiving inputs from the frequency domain decorrelated signal as well as features from the time domain network.

According to an optional feature of the invention, the second neural network section comprises a downscale section followed by an upscale section, and the set of feature values adapt values of the downscale section.

This may provide a particularly efficient and high performance operation in many scenarios, and may typically result in substantially improved audio quality of the generated output multichannel audio signal. The approach may in particular allow an overall structure that is particularly adapted to effectively provide an improved decorrelated signal resulting in an improved audio quality while allowing low complexity and resource usage. In many embodiments, the set of feature values may condition values of the downscale section.

In many embodiments, the feature values may not adapt values of the upscale section of the second neural network section.

A downscale section may be a section that includes at least one downscale/downsample/temporal resolution reduction/pooling between at least two (subsequent) layers and with no upscale/upsample/temporal increment operation between any two (subsequent) layers.

An upscale section may be a section that includes at least one upscale/upsample/temporal increment operation between at least two (subsequent) layers and with no downscale/downsample/temporal resolution reduction/pooling between any two (subsequent) layers.

In some embodiments, the second neural network section employs an encoder-decoder artificial neural network structure, and the set of feature values adapt values of an encoder section of the encoder-decoder artificial neural network structure.

This may provide a particularly efficient and high performance operation in many scenarios, and may typically result in substantially improved audio quality of the generated output multichannel audio signal. The approach may in particular allow an overall structure that is particularly adapted to effectively provide an improved decorrelated signal resulting in an improved audio quality while allowing a low complexity and resource usage. In many embodiments, the set of feature values may condition values of the encoder section.

In many embodiments, the feature values may not adapt values of the decoder section of the encoder-decoder artificial neural network structure.

According to an optional feature of the invention, the envelope compensator is arranged to condition output values of at least one layer of the second neural network section in dependence of the set of feature values.

This may provide a particularly efficient and high performance operation and/or may facilitate implementation.

In many embodiments, the envelope compensator may be arranged to modify/adapt/change output and/or input values of at least one layer of the second neural network section in dependence of the set of feature values.

According to an optional feature of the invention, the envelope compensator is arranged to adapt values of at least a first layer and a second layer of the second neural network sector dependent on the set of feature values.

This may provide a particularly efficient and high performance operation and/or may facilitate implementation.

The envelope compensator may be arranged to condition/modify/adapt/change (output and/or input) values of at least a first layer and a second layer of the second neural network sector dependent on the set of feature values.

This may provide a particularly efficient and high performance operation in many scenarios, and may typically result in substantially improved audio quality of the generated multichannel audio signal.

According to an optional feature of the invention, the first layer and the second layer have different temporal resolutions.

This may be particularly advantageous in many embodiments and/or scenarios.

In many embodiments, the second neural network section may include a pooling operation between the first layer and the second layer. In many embodiments, the first layer and the second layer may operate on different sample rates. In many embodiments, the first layer and the second layer may have different numbers of neurons.

The first layer and the second layer may operate at different time scales.

According to an optional feature of the invention, the envelope compensator comprises a first feature translation neural network section comprising at least one layer for generating a first translated set of feature values from the set of feature values and a second feature translation neural network section comprising at least one layer for generating a second translated set of feature values from the set of feature values; and the envelope compensator is arranged to adapt values of the first layer in dependence on the first translated set of feature values and to adapt values of the second layer in dependence on the second translated set of feature values.

This may be particularly advantageous in many embodiments and/or scenarios.

The first and second feature translation neural network sections may specifically be one or more convolutional layers.

In many embodiments, the second neural network section includes a downsampler between the first layer and the second layer and the first neural network section includes at least one pooling function applied to the first set of feature values to generate feature values for the second layer.

According to an optional feature of the invention, the trained artificial neural network comprises a pooling operation for the set of feature values between the first feature translation neural network section and the second feature translation neural network section.

This may be particularly advantageous in many embodiments and/or scenarios.

According to an optional feature of the invention, the trained artificial neural network is a multiscale artificial neural network.

This may be particularly advantageous in many embodiments and/or scenarios.

According to an optional feature of the invention, the envelope compensator comprises an envelope estimator arranged to generate envelope samples being samples of an envelope of the time domain audio signal and wherein the input values to the trained artificial neural network include the envelope samples.

This may be particularly advantageous in many embodiments and/or scenarios.

The envelope samples may be envelope measurements. The envelope estimator may in some cases be arranged to determine the envelope samples by applying a magnitude operation/function to samples of the time domain audio signal. The envelope samples may in many cases be input to the first neural network section (but often not to the second neural network section).

According to an optional feature of the invention, the envelope samples include both samples of an envelope of minimum values of the time domain audio signal and samples of an envelope of maximum values of the time domain audio signal.

This may be particularly advantageous in many embodiments and/or scenarios.

In many embodiments, the envelope samples include both samples of an envelope of positive values of the time domain audio signal and samples of an envelope of negative values of the time domain audio signal.

According to an optional feature of the invention, the trained artificial neural network is trained using training data comprising a plurality of training time domain audio signals and a cost function dependent on a difference measure between the compensated frequency domain decorrelated signals and training frequency domain decorrelated signals having a time domain envelope matching the training time domain audio signals.

This may provide a particularly efficient implementation and/or improved performance. In many scenarios, improved audio quality of the multichannel output audio signal may be achieved. The envelope compensator may be efficiently trained to provide improved envelope compensation based on such a training process.

In some embodiments, the artificial neural network is trained using training data comprising a plurality of training time domain audio signals and a cost function dependent on a difference measure between time domain envelopes of the training time domain audio signals and time domain envelopes for compensated frequency domain decorrelated signals generated for the training time domain audio signals.

According to an optional feature of the invention, the trained artificial neural network comprises at least one convolutional layer receiving samples of the time domain audio signal and at least one convolutional layer receiving samples of the frequency domain decorrelated signal.

This may provide a particularly advantageous and efficient envelope compensation. In many embodiments, the trained artificial neural network may comprise at least one fully connected layer.

According to an aspect of the invention, there is provided a method of generating an output multichannel audio signal, the method comprising: receiving a frequency domain audio signal and a time domain audio signal, the frequency domain audio signal being a frequency domain representation of a downmix of a multichannel audio signal and the time domain audio signal being a time domain representation of the downmix of the multichannel audio signal; generating a frequency domain decorrelated signal by applying a decorrelation to the frequency domain audio signal; generating an envelope compensated frequency domain decorrelated signal by applying a time domain envelope compensation to the frequency domain decorrelated signal, the time domain envelope compensation reducing a difference between a time domain envelope of the downmix of a multichannel audio signal and a time domain envelope of the frequency domain decorrelated signal, the envelope compensator comprising a trained artificial neural network having input values determined from the time domain audio signal and from the frequency domain decorrelated signal and generating values of the envelope compensated frequency domain decorrelated signal; and generating the output multichannel audio signal by upmixing from the frequency domain audio signal and the envelope compensated frequency domain decorrelated signal.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which:

FIG. 1 illustrates some elements of an example of an audio apparatus in accordance with some embodiments of the invention;
FIG. 2 illustrates some elements of an example of a time to frequency converter for an audio apparatus in accordance with some embodiments of the invention;
FIG. 3 illustrates an example of a structure of an artificial neural network;
FIG. 4 illustrates an example of a node of an artificial neural network including a nonlinear activation function;
FIG. 5 illustrates examples of an audio signal and a decorrelated signal generated from the audio signal;
FIG. 6 illustrates some elements of an example of an audio apparatus in accordance with some embodiments of the invention;
FIG. 7 illustrates some elements of an example of an envelope compensator for an audio apparatus in accordance with some embodiments of the invention;

FIGs. 8 and 9 illustrate some elements of an example of an envelope compensator for an audio apparatus in accordance with some embodiments of the invention;

FIG. 10 illustrates an example of elements of an arrangement for training a neural network; and

FIG. 11 illustrates some elements of a possible arrangement of a processor for implementing elements of an audio apparatus in accordance with some embodiments of the invention.

DETAILED DESCRIPTION OF SOME EMBODIMENTS OF THE INVENTION

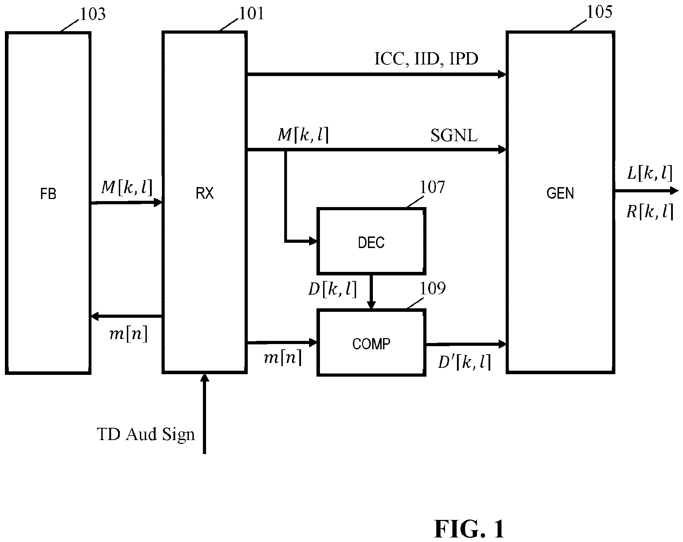

FIG. 1 illustrates some elements of an audio apparatus arranged to generate a multichannel audio signal.

The audio apparatus comprises a receiver 101 which is arranged to receive a data signal/ bitstream comprising an audio signal which specifically is a downmix audio signal being a downmix of a multichannel audio signal which is recreated/generated by the audio apparatus. The following description will focus on a case where the multichannel audio signal is a stereo signal and the downmix signal is a mono signal, but it will be appreciated that the described approach and principles are equally applicable to the multichannel audio signal having more than two channels and to the downmix signal having more than a single channel (albeit fewer channels than the multichannel audio signal).

The receiver 101 is arranged to receive both a time domain audio signal and a frequency domain audio signal version/representation of the downmix signal. In some cases, the received bitstream may include the downmix signal in only one representation, i.e. the bitstream may include only one of the frequency domain audio signal and the time domain audio signal. In such cases, the received bitstream may be fed to a transformer which may perform a transform to the other domain and feed this signal back to the receiver 101. Thus, in some cases, a received bitstream may include a time domain audio signal being the time domain representation of the downmix signal, and a time to frequency domain transformer may from this generate the frequency domain audio signal for the downmix signal. In some cases, a received bitstream may include a frequency domain audio signal being the frequency domain representation of the downmix signal and a frequency to time domain transformer may from this generate the time domain audio signal for the downmix signal. Thus, in some cases, the receiver 101 may receive the time domain audio signal from an external source and the frequency domain audio signal from an internal source (the domain transformer) or vice versa. The time domain audio signal may also be referred to as the downmix time domain audio signal and the frequency domain audio signal may also be referred to as the downmix frequency domain audio signal.

In particular, in the example of FIG. 1, the audio apparatus comprises a filter bank 103 which is arranged to generate a frequency subband representation of a received time domain (downmix) audio signal. Typically, the audio apparatus may comprise a filter bank 103 that is applied to the audio signal such that it is divided into frequency subbands.

The filter bank may be Quadrature Mirror Filter (QMF) bank or may e.g. be implemented by a Fast Fourier Transform (FFT), but it will be appreciated that many other filter banks and approaches for dividing an audio signal into a plurality of subband signals are known and may be used. The filterbank may specifically be a complex-valued pseudo QMF bank, resulting in e.g. 32 or 64 complex-valued sub-band signals.

The processing is furthermore typically performed in time segments or time slots. In most embodiments, the audio signal is divided into time intervals/segments with a conversion to the frequency/subband domain by applying e.g. an FFT or QMF filtering to the samples of each signal. For example, each channel of the downmix audio signal may be divided into time segments of e.g. 2048, 1024, or 512 samples. These signals may then be processed to generate samples for e.g. 64, 32 or 16 subbands. Thus, a set of samples may be determined for each subband of the downmix audio signal.

It should be noted that the number of time domain samples is not directly coupled to the number of subbands. Typically, for a so-called critically sampled filterbank of N bands, every N input samples will lead to N sub-band samples (one for every sub-band). An oversampled filterbank will produce more output samples. E.g. for every N input samples, it would generate k*N output samples, i.e., k consecutive samples for every band.

In some embodiments, the subbands are generated to have the same bandwidth but in other embodiments subbands are generated to have different bandwidths, e.g. reflecting the sensitivity of human hearing to different frequencies.

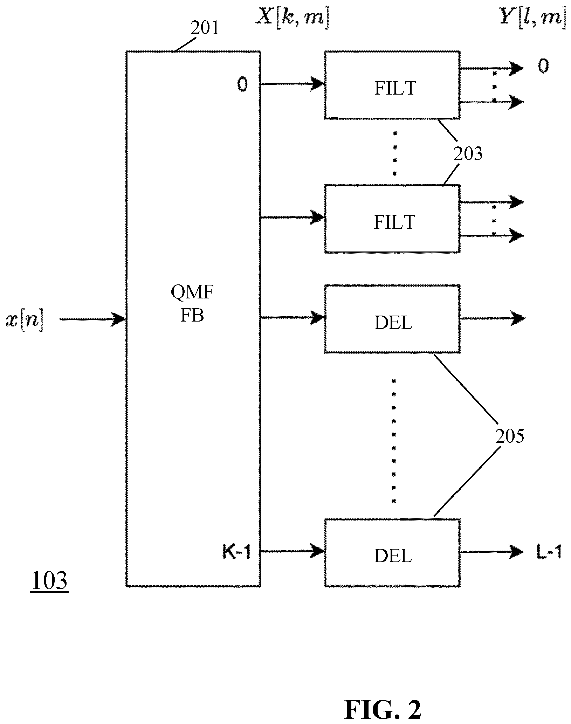

FIG. 2 illustrates an example of an approach where different bandwidths are generated by a hybrid analysis/-synthesis filter bank approach.

In the example, this is realized by a combination of a complex-valued pseudo QMF bank 201 and a small filter bank 203 for the lower frequency bands to realize a higher frequency resolution, as desired for binaural perception of the human auditory system. The result is a hybrid filterbank with logarithmic filter band center-frequency spacings that follow that of human perception similar to equivalent rectangular bandwidths (ERBs). In order to compensate for the delay of the filtering by the small filter bank 203, a delay 205 is introduced for higher frequency subbands.

In the specific example, a time-domain signal $x[n]$ is fed through a downsampled complex-exponential modulated QMF bank with $K$ bands. Each frame of 64 time domain samples $x[n]$ results in one slot of QMF samples $X[k, l]$ with $k = (0, ..., K - 1)$ at slot $l$. The lower slots are then filtered by additional complex-modulated filterbanks splitting the lower bands further.

The higher slots are delayed ensuring that the filtered signals of the lower bands are in sync with the higher bands as the filtering introduces a delay. This finally results in a structure where for every 64 time-domain samples $x[n]$, one slot m of hybrid QMF samples $Y[k, l]$ is produced with $k = (0, ..., L - 1)$ at slot $l$, e.g. with a total number of hybrid bands $M = 77$.

The received data signal further includes upmix parametric data for upmixing the downmix audio signal. The upmix parametric data may specifically be a set of parameters that indicate relationships between the signals of different audio channels of the multichannel audio signal (specifically the stereo signal) and/or between the downmix signal and audio channels of the multichannel audio signal. Typically, the upmix parameters may be indicative of time differences, phase differences, level/intensity differences and/or a measure of similarity, such as correlation. Typically, the upmix parameters are provided on a per time and per frequency basis (time frequency tiles). For example, new parameters may periodically be provided for a set of subbands. Parameters may specifically include Inter-channel phase difference (IPD), Overall phase difference (OPD), Inter-channel correlation (ICC), Channel phase difference (CPD) parameters as known from Parametric Stereo encoding (as well as from higher channel encodings).

Typically, the downmix audio signal is encoded/compressed and the receiver 101 may include a decoder function that decodes/extracts the downmix audio signal, i.e. the mono signal in the specific example.

The receiver 101 is coupled to a generator 105 which generates the multichannel audio signal from the frequency domain audio signal. In the example, the generator 105 is arranged to generate the multichannel audio signal by (up) mixing of (at least) the frequency domain audio signal and an auxiliary audio signal generated from the frequency domain audio signal. The upmixing is performed in dependence on the parametric upmix data.

The generator 105 may specifically for the stereo case generate the output multichannel audio signal by applying a 2x2 matrix multiplication to the samples of the downmix audio signal and the auxiliary audio signal. The coefficients of the 2x2 matrix are determined from the upmix parameters of the upmix parametric data, typically on a time and frequency band basis. For other upmix operations, such as from a mono or stereo downmix signal to a five channel multichannel audio signal, the generator 105 may apply matrix multiplications with matrices of suitable dimensions.

It will be appreciated that many different approaches of generating such a multichannel audio signal from a downmix audio signal and an auxiliary audio signal, and for determining suitable matrix coefficients from upmix parametric data, will be known to skilled person and that any suitable approach may be used. Specifically, various approaches for Parametric Stereo upmixing that are based on downmix and auxiliary audio signals are well known to the skilled person.

The auxiliary audio signal is generated from the frequency domain audio signal by applying a decorrelation operation/function to the frequency domain audio signal and thus the auxiliary audio signal is a decorrelated signal corresponding to the frequency domain audio signal. It has been found that by generating a decorrelated signal and mixing this with a downmix audio signal, and specifically a mono audio signal for stereo upmixing, an improved quality of the upmix signal is perceived and many decoders have been developed to exploit this. The decorrelated signal may for example be generated by a decorrelator in the form of an all-phase filter that is applied to the downmix audio signal.

Accordingly, the audio apparatus of FIG. 1 comprises a decorrelator 107 which is arranged to generate a frequency domain decorrelated signal by applying a decorrelation function/process to the frequency domain audio signal.

It will be appreciated that many different approaches for generating a frequency domain decorrelated signal from a frequency domain audio signal are known and that any suitable approach may be used without detracting from the invention.

For example, the decorrelator 107 may consist of a filtering of the input signal with a decaying noise sequence not unlike a reverberator. The decay characteristics may be frequency-dependent. As another example, the decorrelator may consist of a bank of all-pass filters that apply appropriate frequency-dependent phase shifts to the signal. Another time-domain approach consists of splitting the signal into overlapping blocks and shuffling them before windowing and resynthesizing them. The latter, however, tends to only work well on random signals such as stationary noise.

However, whereas the use of a decorrelation signal in the upmixing has indeed been found to provide improved audio quality, the audio apparatus of FIG. 1 is arranged to not directly use the generated frequency domain decorrelated signal. Rather, the decorrelator 107 is coupled to an envelope compensator 109 which is arranged to perform a time domain envelope compensation of the frequency domain decorrelated signal to generate an envelope compensated frequency domain decorrelated signal, henceforth for brevity referred to as the compensated frequency domain decorrelated signal. The envelope compensator 109 is coupled to the generator 105 which is fed the compensated frequency domain decorrelated signal which is then used as the auxiliary audio signal for upmixing. Thus, the generator 105 generates the multichannel audio signal by upmixing the frequency domain audio signal and the compensated frequency domain decorrelated signal.

The envelope compensator 109 is arranged to apply a time domain envelope compensation to the frequency domain decorrelated signal. The time domain envelope compensation reduces the envelope difference between the downmix time domain audio signal and the time domain decorrelated signal that would result from converting the (compensated) frequency domain decorrelated signal to the time domain. Thus, if all signals are converted to the time domain, the envelope of the compensated decorrelated signal will match the envelope of the downmix audio signal more closely than the envelope of the non-compensated decorrelated signal. In other words, the difference between the time domain envelope of the decorrelated signal at the output of the envelope compensator 109 and the time domain envelope of the downmix audio signal/time domain audio signal is lower than the time domain envelope of the time domain decorrelated signal at the input of the time domain envelope compensator 109 and the time domain envelope of the downmix audio signal/ time domain audio signal.

The time domain envelope for a signal may specifically be a smooth signal that outlines the extremes of the underlying signal. It is the boundary within which the signal is contained. A known method of deriving the time domain envelope from a signal consists of a full- or half-wave rectifier, producing the absolute value of the signal, after which a smooth line is extracted that goes through consecutive peaks of the signal. In some cases, the envelope is allowed to move up quickly to be able to follow transients properly, whereas it is set to decay slowly. The envelope of a signal may in some cases correspond to the magnitude or amplitude of the signal.

The time domain envelope of an audio signal may be a time domain signal corresponding to/that would result from a low pass filtering of the signal or of a rectified version of the signal (i.e. of the signal resulting from rectifying the original signal). The low pass filtering may be by an ideal low pass filter, which may have a cut-off frequency of e.g. 5Hz, 10Hz, 20Hz, 50 Hz, or 100Hz. The time domain envelope may also be referred to as the time domain amplitude or the time domain level.

The envelope of an audio signal may reflect the slow variations in the level of the signal and thus remove or filter out the fast/higher variations. The envelope may reflect the (smoothed) signal power/energy level.

The envelope of a signal may be considered a positive, i.e. no zero-crossings, signal that follows the slow-varying amplitude dynamics of the signal. The envelope of a signal may be considered that which results from a (half-or full wave) rectification followed by a low pass filtering (e.g. with a cut off frequency as indicated above). The envelope may be the amplitude of the analytical signal (removing negative frequency terms from the real signal) as realized typically by the Hilbert transform.

In many cases, the envelope of a signal may have both a maximum envelope which is generated/determined by the maximum values of the signal and a minimum envelope generated/determined by the maximum values of the signal. In many cases, the maximum envelope may be generated/determined by the maximum positive values and the minimum envelope may be generated/determined by the most negative values. Thus, a positive envelope may be determined by the positive values with the largest magnitude/absolute value and a negative envelope may be determined by the negative values with the largest magnitude/absolute value.

The Inventors have realized that an issue with many decorrelation processes is that the decorrelated signal will not have properties that ideally reflect the original downmix audio signal from which it is generated, and that it in particular will not have the same envelope/signal level/ amplitude/power properties. The Inventors have further realized that such effects can be mitigated and reduced by a particular application of artificial neural networks.

In the audio apparatus of FIG. 1, a two stage process is employed where a decorrelated signal is first generated from the audio signal and then compensated using a neural network approach. In particular, the generation of the multichannel audio signal is improved by a particular arrangement in which a trained artificial neural network is included in a specific functional block that performs time domain envelope compensation of a generated decorrelation signal that is used for upmixing to generate the multichannel audio signal. The Inventors have realized that a practical implementation and high performance is achieved by a particular structure where a trained artificial neural network is specifically trained to be part of a time domain envelope compensation of a frequency domain decorrelated signal. In particular, the compensation is performed on a frequency domain signal, yet is of a time domain property. The trained artificial neural network is particularly efficient in this situation and in particular can be trained efficiently using relatively low complexity training signals and procedures.

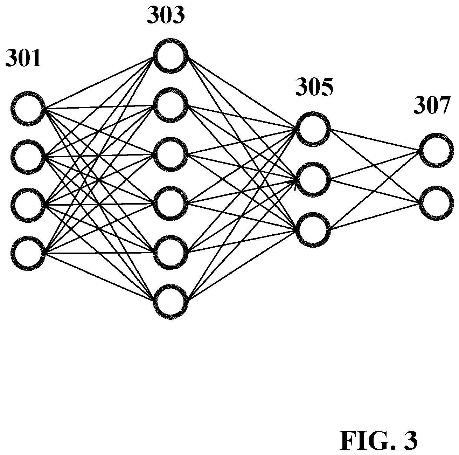

An artificial neural network as used in the described functions may be a network of nodes arranged in layers and with each node holding a node value. FIG. 3 illustrates an example of a section of an artificial neural network.

The node value for a given node may be calculated to include contributions from some or often all nodes of a previous layer of the artificial neural network. Specifically, the node value for a node may be calculated as a weighted summation of the node values of all the nodes output of the previous layer. Typically, a bias may be added and the result may be subjected to an activation function. The activation function provides an essential part of each neuron by typically providing a non-linearity. Such non-linearities and activation functions provides a significant effect in the learning and adaptation process of the neural network. Thus, the node value is generated as a function of the node values of the previous layer.

The artificial neural network may specifically comprise an input layer 301 comprising a plurality of nodes receiving the input data values for the artificial neural network. Thus, the node values for nodes of the input layer may typically directly be the input data values to the artificial neural network and thus may not be calculated from other node values.

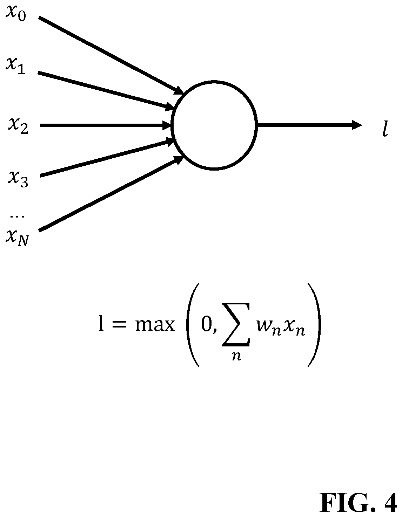

The artificial neural network may further comprise none, one, or more hidden layers 303, 305 or processing layers. For each of such layers, the node values are typically generated as a function of the node values of the nodes of the previous layer, and specifically a weighted combination and added bias followed by an activation function (such as a sigmoid, ReLU, or Tanh function may be applied). Specifically, as shown in FIG. 4, each node, which may also be referred to as a neuron, may receive input values (from nodes of a previous layer) and therefrom calculate a node value as a function of these values. Often, this includes first generating a value as a linear combination of the input values with each of these weighted by a weight:

$$k = \sum_n w_n x_n$$

where w refers to weights, x refers to the nodes of the previous layer and n is an index referring to the different nodes of the previous layer.

An activation function may then be applied to the resulting combination. For example, the node value l may be determined as:

$$l = f(k)$$

where the function may for example be a Rectified Linear Unit (as described in Xavier Glorot, Antoine Bordes, Yoshua Bengio Proceedings of the Fourteenth International Conference on Artificial Intelligence and Statistics, PMLR 15:315-323, 2011) function:

$$f(k) = ReLU(k) = \max(0, k)$$

Other often used functions include a sigmoid function or a tanh function. In many embodiments, the node output or value may be calculated using a plurality of functions. For example, both a ReLU and Sigmoid function may be combined using an activation function such as:

$$f(k) = ReLU(k) + \sigma(k)$$

Such operations may be performed by each node of the artificial neural network (except for typically the input nodes).

The artificial neural network further comprises an output layer 307 which provides the output from the artificial neural network, i.e. the output data of the artificial neural network is the node values of the output layer. As for the hidden/ processing layers, the output node values are generated by a function of the node values of the previous layer. However, in contrast to the hidden/ processing layers where the node values are typically not accessible or used further, the node values of the output layer are accessible and provide the result of the operation of the artificial neural network.

A number of different networks structures and toolboxes for artificial neural network have been developed and in many embodiments the artificial neural network may be based on adapting and customizing such a network. An example of a network architecture that may be suitable for the applications mentioned above is WaveNet by van den Oord et al which is described in Oord, Aaron van den, Sander Dieleman, Heiga Zen, Karen Simonyan, Oriol Vinyals, Alex Graves, Nal Kalchbrenner, Andrew Senior, and Koray Kavukcuoglu. "Wavenet: A generative model for raw audio." arXiv preprint arXiv: 1609.03499 (2016).

WaveNet is an architecture used for the synthesis of time domain signals using dilated causal convolution, and has been successfully applied to audio signals. For WaveNet the following activation function is commonly used:

$$\mathbf{z} = \tanh\left(W_{f,k} * \mathbf{x}\right) \odot \sigma\left(W_{g,k} * \mathbf{x}\right),$$

where * denotes a convolution operator, $\odot$ denotes an element-wise multiplication operator, $\sigma(\cdot)$ is a sigmoid function, k is the layer index, f and g denote filter and gate, respectively, and W represents the weights of the learned artificial neural network. The filter product of the equation may typically provide a filtering effect with the gating product providing a weighting of the result which may in many cases effectively allow the contribution of the node to be reduced to substantially zero (i.e. it may allow or "cut-off' the node providing a contribution to other nodes thereby providing a "gate" function). In different circumstances, the gate function may result in the output of that node being negligible, whereas in other cases it would contribute substantially to the output. Such a function may substantially assist in allowing the neural network to effectively learn and be trained.

An artificial neural network may in some cases further be arranged to include additional contributions that allow the artificial neural network to be dynamically adapted or customized for a specific desired property or characteristics of the generated output. For example, a set of values may be provided to adapt the artificial neural network. These values may be included by providing a contribution to some nodes of the artificial neural network. These nodes may be specifically input nodes but may typically be nodes of a hidden or processing layer. Such adaptation values may for example be weighted and added as a contribution to the weighted summation/ correlation value for a given node. For example, for WaveNet such adaptation values may be included in the activation function. For example, the output of the activation function may be given as:

$$\mathbf{z} = \tanh\left(W_{f,k} * \mathbf{x} + V_{f,k} * \mathbf{y}\right) \odot \sigma\left(W_{g,k} * \mathbf{x} + V_{g,k} * \mathbf{y}\right)$$

where y is a vector representing the adaptation values and V represents suitable weights for these values.

The above description relates to a neural network approach that may be suitable for many embodiments and implementations. However, it will be appreciated that many other types and structures of neural network may be used. Indeed, many different approaches for generating a neural network have been, and are being, developed including neural networks using complex structures and processes that differ from the ones described above. The approach is not limited to any specific neural network approach and any suitable approach may be used without detracting from the invention.

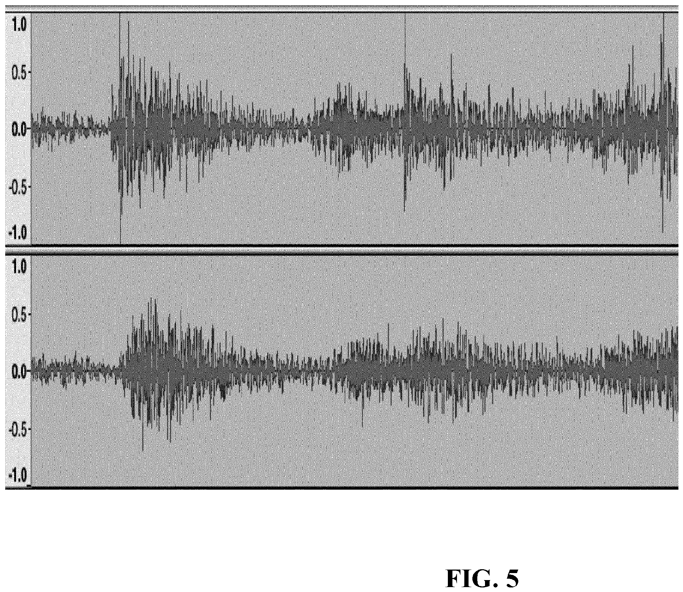

The Inventors have realized that the particular structure and use of an artificial neural network to perform time domain envelope compensation provides a particular efficient operation by addressing a particular issue/effect of many conventional approaches. The Inventors have realized that generating a decorrelated signal by means of e.g. all-pass processing is highly effective for stationary signals but for non-stationary signals, such as e.g. applause signals, the decorrelated signal often does not properly follow the temporal envelope of the received downmix audio signal. An example of a mono downmix audio signal and a generated decorrelation signal is shown in FIG. 5. It can be observed that much of the temporal detail or sharpness is lost in the decorrelated signal. This leads to a reduction in audio quality after upmixing with the downmix audio signal to generate the multichannel audio signal based on the upmix parameters.

A decorrelated signal that more closely follow the temporal envelope of the downmix/mono signal is preferred and in the apparatus of FIG. 1 this is achieved by the inclusion of envelope compensation by the envelope compensator 109.

If the time-domain representation of the mono downmix audio signal is represented as a temporally flat signal $\overline{m}$ [$n$] modulated by an envelope $e_m[n]$ :

$$m[n] = \overline{m}[n] \cdot e_m[n]$$

The time-domain representation of the corresponding generated decorrelated signal $d[n]$ is represented as a temporally flat signal $\overline{d}[n]$ modulated by an envelope $e_d[n]$:

$$d[n] = \overline{d}[n] \cdot e_d[n]$$

It is desired to create a decorrelated signal that is close to:

$$d'[n] = \overline{d}[n] \cdot e_m[n]$$

One solution could consist of: converting the decorrelated signal back to the time domain by means of a hybrid synthesis filter bank (and converting the downmix audio signal if this is not already available in the time domain), run two envelope estimation algorithms on the time domain downmix audio signal and the time domain decorrelated signal respectively, adjust the temporal envelope of the decorrelated signal accordingly, and convert the adapted decorrelated signal back to the hybrid QMF domain by means of a hybrid analysis bank. However, this operation is computationally costly and will introduce significant processing delay.

To mitigate the problems, a solution operating in the frequency domain, and specifically in a hybrid QMF domain may be employed. For example, an artificial neural network could possibly be applied directly to the frequency domain decorrelated signal to generate the compensated frequency domain decorrelated signal. Indeed, possibly, the frequency domain audio signal could also be applied to such a frequency domain artificial neural network.

However, the Inventors have realized that particular issues may arise with such approaches and that it may be suboptimal in some embodiments and scenarios.

For example, the Inventors have realized that such an approach may typically require a high degree of complexity. They have realized that such approaches tend to require considerable processing/network architecture directed to extracting the time domain envelope from the combined frequency (and specifically hybrid QMF) domain signals over all bands. The frequency (QMF) sub-band domain representation (or any other type of filter-bank/transform representation) of a transient-type of signal is notoriously inefficient. A perfectly localized Dirac pulse in the time domain is represented as a series of harmonic basis functions in the sub-band/frequency domain (or even as flat/white noise). As a result, in order to reconstruct/determine the temporal envelope of such a signal, several samples are required over all sub-bands. From a neural network architecture point of view this means that to establish/capture a representation of the envelope of a transient signal, a large area of input samples, both in time and frequency, have to be considered leading to complex structures and resulting in a very large number of operations and calculations being required.

The approach also tends to have issues in terms of latency and requiring lookahead which may introduce undesirable delays. For example, given the decomposition properties of pulse-like signals such as a Dirac pulse, in order to properly estimate a representation of the time domain envelope at a certain time instant $n$ in the sub-band/frequency domain necessary to also consider "future" frequency domain samples. The full time domain (envelope) signal is only fully "known" once all overlapping samples have been processed.

In the following an approach will be described which may provide advantageous performance, operation, and/or implementation, and which in particular may typically address some of the issues mentioned above.

In the approach, the envelope compensator 109 includes a trained neural network which is used to generate the compensated frequency domain decorrelated signal from the frequency domain decorrelated signal. However, rather than being a frequency domain neural network, the trained artificial neural network of the envelope compensator 109 is a hybrid domain artificial neural network which in addition to the compensated frequency domain decorrelated signal also considers time domain properties, and indeed considers time domain values/samples of the downmix time domain audio signal. The envelope compensator 109 is thus a hybrid frequency and time domain envelope compensator 109 that considers multiple signals with these being in respectively the frequency domain and the time domain.

The envelope compensator 109 of FIG. 1 is arranged to receive the time domain audio signal providing a representation of the underlying downmix audio signal. Thus, in the example, both the time domain audio signal of the downmix signal and the frequency domain decorrelated signal generated from the downmix are fed to the envelope compensator 109 and used by the trained artificial neural network to generate the compensated frequency domain decorrelated signal. The artificial neural network accordingly is a hybrid frequency-time artificial neural network generating a compensated frequency domain output signal (the compensated frequency domain decorrelated signal).

In many embodiments, the artificial neural network is accordingly based on the time domain audio signal but does not consider the frequency domain audio signal, i.e. only the time domain representation of the downmix signal is (directly) considered/input to the artificial neural network.

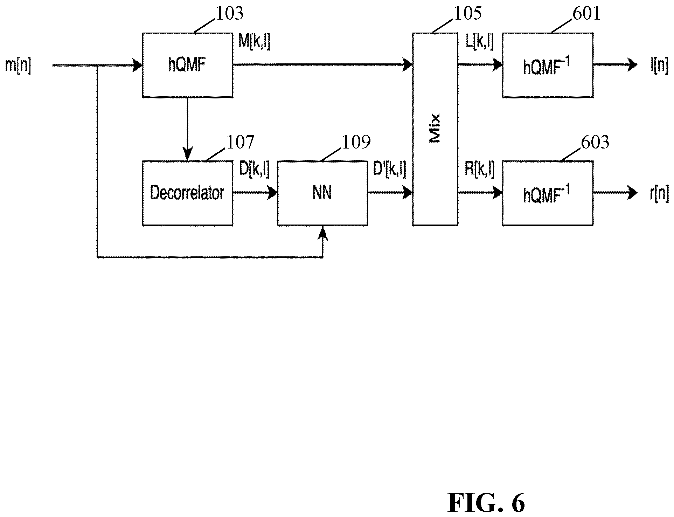

An example of a realization of the audio apparatus of FIG. 1 is illustrated in FIG. 6. In the example, the (downmix) time domain audio signal $m[n]$ is transformed to the sub-band/frequency domain signal $M[k, l]$. This signal is fed through a decorrelator filter 107 resulting in the frequency domain decorrelated signal $D[k, l]$. This signal is fed through the artificial neural network 109 resulting in the compensated frequency domain decorrelated signal $D'[k, l]$. It should be noted that the artificial neural network receives both the frequency domain decorrelated signal $D[k, l]$ and the (downmix) time domain audio signal $m[n]$. The artificial neural network has been (pre-)trained to ensure that the time domain equivalent of $D'[k, l]$, $d'[n]$ would have substantially the same (or at least a closer) temporal envelope as $m[n]$. The sub-band/frequency domain signals $M[k, l]$ and $D'[k, l]$ (i.e. the (downmix) frequency domain audio signal and the compensated frequency domain decorrelated signal) are fed through a stereo reconstruction mixer, resulting in frequency domain channels/signals $L[k, l]$ and $R[k, l]$ of the output multichannel audio signal. These signals are converted back to the time domain signals $l[n]$, $r[n]$ using suitable inverse transforms 601, 603. The stereo reconstruction mixing is performed in dependence on the received upmix parameters which for brevity are not illustrated in FIG. 6.

In the example, the trained artificial neural network accordingly receives input from both the time domain audio signal and from the frequency domain decorrelated signal. The artificial neural network is trained to generate samples/-signal values of the envelope compensated frequency domain decorrelated signal such that the time domain envelope of (the time domain version) of this signal is more similar to the time domain envelope of the (downmix) time domain audio signal than is the case for the frequency domain decorrelated signal. The envelope compensator 109, and in particular the artificial neural network, thus performs a time domain envelope compensation to the frequency domain decorrelated signal which reduces the difference between the time domain envelope of the received downmix audio signal and the time domain envelope of the (compensated) frequency domain decorrelated signal.

The approach, and in particular the use of an artificial neural network trained to consider both frequency domain and time domain data and aspects, has been found to provide highly advantageous operation in many scenarios. It allows a low complexity artificial neural network implementation including reducing complexity and computational resource required (typically both for the artificial neural network operation and from surrounding circuits). Further, the approach may substantially reduce latency and delays and for example does not require full representation or consideration of future signal values or properties.

The envelope compensator 109 may specifically reinstate the time domain envelope of the downmix audio signal onto the decorrelated signal using a pre-trained artificial neural network. The approach may specifically provide an improved temporal envelope reconstruction with typically a finer temporal resolution. This is realized using an artificial neural network which has been trained by learning how information from the different frequency samples should be combined (both in time and frequency direction) to reconstruct temporally high resolution envelopes and with the artificial neural network adapting the frequency samples of the frequency domain decorrelated signal based on time domain information/considerations/date.

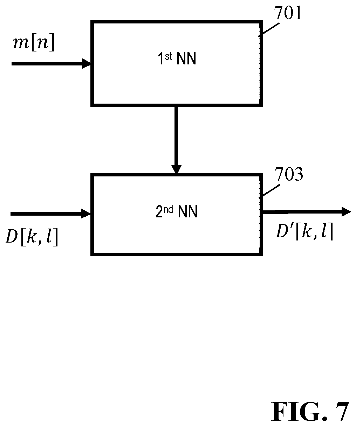

In many embodiments, the artificial neural network of the envelope compensator 109 may be arranged in a particular structure suitable for combining the time domain and frequency domain data and operations. As illustrated in FIG. 7, the envelope compensator 109/artificial neural network may in particular include a first neural network section 701 which is arranged to receive input values determined from the time domain audio signal and to generate a set of feature values. This first section 701 thus generates a set of feature values that are based on the time domain audio signal and thus which may characterize/represent the time domain audio signal. The set of features may in particular provide information relating to the time domain envelope of the time domain audio signal that is suitable for modifying adapting the second section 703 and the processing of the frequency domain decorrelated signal.

In the arrangement, the first neural network section 701 does not receive any input from the frequency domain decorrelated signal or indeed from any frequency domain signal. It may typically receive only data (generated) from the time domain audio signal and may be considered a time domain artificial neural network operating only on time domain information and generating time domain information in the form of the set of feature values.

The envelope compensator 109/artificial neural network further includes a second neural network structure 703 which is arranged to receive the frequency domain decorrelated signal as input values. The second neural network structure generates samples of the compensated frequency domain decorrelated signal based on the input values in the form of samples of the frequency domain decorrelated signal and accordingly can be considered to be a frequency domain artificial neural network operating on frequency domain information and generating frequency domain information in the form of the compensated frequency domain decorrelated signal.

The second neural network structure 703 further receives the feature values from the first neural network section 701 and these feature values are taken into account and specifically used to modify (data/values of) the second neural network structure 703 when generating the compensated frequency domain decorrelated signal samples. The feature values may specifically be used to adapt/modify the values within the second neural network structure 703. The feature values may in particular be arranged to adapt/condition one or more input and/or output values of neurons of one or more of the layers of the second neural network structure 703. Equivalently, the feature values may in some cases be used to adapt or modify e.g. weights and/or properties of the activation function(s).

The envelope compensator 109 may condition/adapt values of neurons of the second neural network section dependent on the set of feature values and/or second neural network section may have an input for receiving the set of feature values.

In many embodiments, the envelope compensator 109 may comprise a feature translation neural network section 801 which includes one or more layers generating a first translated set of feature values from the set of feature values. These translated features may then be used to adapt/condition values of a layer of the second neural network structure 703. The feature translation neural network section may further comprise a second layer which generates a second translated set of feature values from the set of feature values. This second translated set of feature values may then be used to adapt/condition values of one or more other layers of the second neural network structure 703. Thus, the two (or more) layers of the translation neural network section may be parallel layers in the sense that they both receive features of the set of features, i.e. a common set of features may be determined using an artificial neural network substructure and subsequently these features (or a subset thereof) may be provided to a translation neural network section which proceeds to therefrom generate modified feature values/sets for different layers of the second neural network structure 703. In many embodiments, the different parts of the translation neural network section generating different translated features for different layers of the second neural network structure 703 may consider different (sub)sets of the set of features. For example, in many embodiments, the second neural network structure 703 may be a multiscale artificial neural network and the subset of features that are considered for a given scale section may be reduced corresponding to the different scale. For example, pooling functions/operations may be applied to the set of features before being applied to the respective layers of the translation neural network section (such operations may be considered part of the translation neural network section).

In many embodiments, at least some of the layers of the translation neural network section may advantageously be convolutional layers. It has been found that particularly advantageous operation and performance can be achieved for such approaches.

The multi-section approach and structure provides an advantageous implementation of neural network approaches in an audio generating/upmixing approach. It provides a particular advantageous generation of a compensated frequency domain decorrelated signal which can result in substantially improved audio quality in the resulting multichannel audio signal. The approach provides a practical implementation and for example may allow reduction or minimization of the operations on, and processing of, the time domain audio signal and the frequency domain decorrelated signal as well as of the generated compensated frequency domain decorrelated signal.

The training of the artificial neural network is typically a combined joint training over both the first neural network section 701 and the second neural network structure 703 (and the translation neural network section). For example, a gradient training process using a cost function depending on the difference between the time domain envelope of the compensated frequency domain decorrelated signal and the time domain envelope of the time domain audio signal/-frequency domain audio signal may be performed as will be described in more detail later.

In many embodiments, the first neural network section 701 and/or the second neural network structure 703 are multiscale/multi time resolution/multi frequency resolution neural network structures.

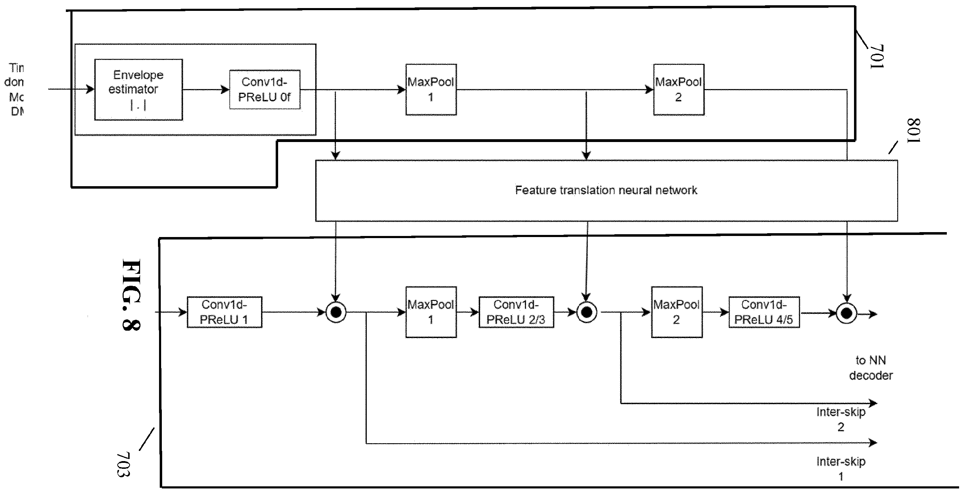

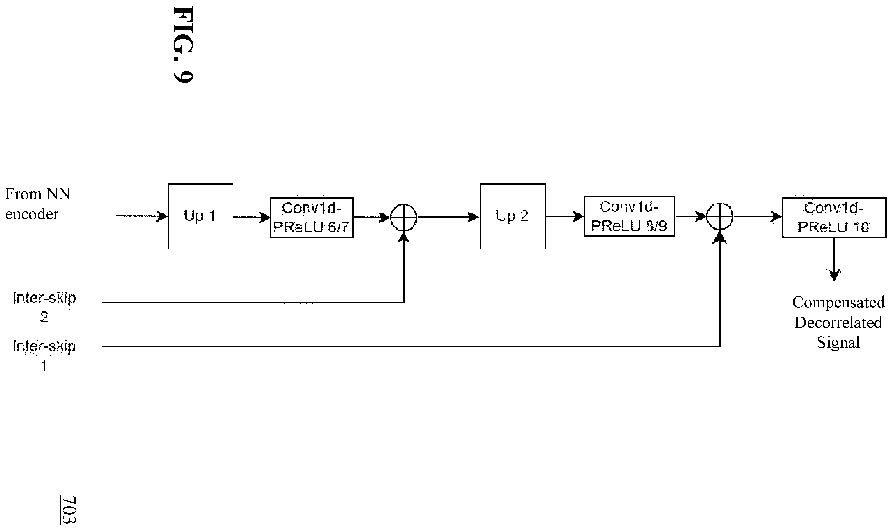

A particular example of an artificial neural network structure that may be employed by the envelope compensator 109 is disclosed in FIGs. 8 and 9. In the example, the artificial neural network is split into two parts, a time-domain part, and a sub-band/frequency domain part, in the form of the first neural network section 701 and the second neural network structure 703 respectively. The goal of the time-domain part is to provide a set of features that are representative of, or can aid the reconstruction of, the temporal envelope of the frequency domain decorrelated signal. The sub-band/frequency domain part (the second neural network structure 703) receives both the sub-band/frequency domain decorrelated signal as well as the features from the time-domain part (the first neural network section 701). It is (pre-)trained to decrease the distance between the temporal envelope of the downmix time domain audio signal signal m[n] and the (time-domain equivalent of) the decorrelated signal D[k,l], resulting in an adapted decorrelated signal D'[k,l].

In the approach of FIGs. 8 and 9, the artificial neural network is split into a first neural network section 701 which performs time domain feature estimation on the downmix time domain audio signal and a second neural network structure 703 which performs time domain envelope compensation in the frequency domain by generating output values corresponding to frequency/subband values of the compensated frequency domain decorrelated signal generated from input values being frequency/subband values of the frequency domain decorrelated signal. The two sections are interfaced via a translation neural network section 801 which can also be considered to be part of the first neural network section 701 and/or the second neural network structure 703.

In the example, the second neural network structure 703 is divided into a downscale section (illustrated in FIG. 8) which is followed by an upscale section (illustrated in FIG. 9) and the set of feature values adapt values of the downscale section. In the downscale section, there is one or more operation of downscaling/downsampling/temporal resolution reduction/pooling between (or included in at least one of) at least two (subsequent) layers of the second neural network structure 703. However, there is no upscaling/upsampling/temporal increment operation being performed in the downscale section.

In the upscale section there is one or more operation of upscaling/upsampling/temporal increment between (or included in at least one of) at least two (subsequent) layers but there is no downscaling/downsampling/temporal resolution reduction/pooling operation being performed.

In the figures, FIG. 8 illustrates the downscale section of the second neural network structure 703 whereas FIG. 9 illustrates the upscale section of the second neural network structure 703.

The downscale and upscale sections may specifically correspond to an encoder-decoder section of an encoder-decoder artificial neural network structure. Thus, FIG. 8 can be considered to show the encoder section of an encoder-decoder artificial neural network structure forming the second neural network structure 703 and FIG. 9 can be considered to show the decoder section.

FIG. 8 shows a downscale/encoder which together with the first neural network section 701 (and the translation neural network section) perform encoding jointly between the downmix time-domain signal and the frequency domain decorrelated signal (which in the specific example is a hQMF domain signal). Examples of input dimensions for the downmix time-domain signal and the (hQMF decorrelator output) are 1 x 4096 (because of the magnitude operation) and 154x64, respectively. For the frequency domain decorrelated signal, the 77 complex frequency/hQMF bands are stacked in real and imaginary parts producing 77+77=154 total channels.

In the specific example, in the first neural network section 701, the absolute value of the downmix time domain audio signal is fed to a 1D convolutional layer with a parametric ReLU (PReLU) activation function. The convolutional layer performs feature estimation and downsampling to match the temporal span of the hQMF domain decorrelator output.

The downscale/encoder section may comprise a series of layers of which some, and in many cases all, are convolutional layers. Further between some (or possibly all) layers, the structure includes a downsampling/scaling function/operation which specifically may be a pooling operation, such as a maximum or average pooling function. Thus, the number of values that progress through the downscale/encoder section may be reduced between (at least some) consecutive layers, and thus the size of each layer may correspondingly be reduced.

Further, for some, or all layers, the values that are fed from one layer to the next are conditioned/adapted based on the (translated) feature values received from the first neural network section 701/translation neural network section. In some embodiments, these features may be provided as input levels to the layers. However, in many cases, the feature values may directly condition/adapt the input and/or output values of the neurons. For example, the features may be combined with the output values of a layer using a suitable operation, such as e.g. by determining dot-product between them.

In particular, the downscale/encoder section of the second neural network structure 703, feature extraction and downsampling are performed via a series of convolutional layers/PReLU activations and max-pooling functions, respectively. The max-pooling functions compute the max values for a given span and stride, e.g., a max-pool with a span of 2 samples and stride of 2 samples results in a downsampling of 2, preserving the maximum samples from adjacent windows of length 2.

The structure includes a translation neural network section 801 which provides a series of feature translation layers that translate the set of features determined from the downmix time domain audio signal to a format suitable for the individual layers of the downscale/encoder section. In particular, the translation neural network section 801 may provide feature values that are directly suitable for element-wise scaling in each of the layers of the downscale/encoder section.

The downscale/encoder section may provide a set of output features which are then passed to the upscale/-decoder section as illustrated in FIG. 9. The upscale/decoder section may comprise a series of layers that generate the output samples of the compensated frequency domain decorrelated signal. Some, and in many cases all, of the layers of the upscale/decoder section are convolutional layers. Further between some (or possibly all) layers, the structure includes an upsampling/upscaling function/operation. Thus, the number of values that progress through the downscale/encoder section may be increased between (at least some) consecutive layers, and thus the size of each layer may correspondingly be increased.

It will be appreciated that in some cases the upsampling/upscaling, as indeed the downsampling/downscaling, may be performed as part of the layers, e.g. the number of neurons of a subsequent layer may be larger or smaller than for a(n immediately) previous layer.

In the specific example of FIG. 9, the upscale/decoder section comprises a series of convolutional layers/PReLU activations and upscaling functions. The structure may generate a compensated frequency domain decorrelated signal which has a (substantially) reinstated temporal envelope. In the specific example, the upscale/decoder section may then produce a 77 x 64 channel complex frequency domain (hQMF) signal.

It should be noted that (any of) the convolutional layers in FIG. 8 and 9 can be replaced by multi-layer sub-networks consisting of e.g. one or more convolutional layers.

The specific exemplary approach may utilize a joint encoding of the downmix time domain audio signal and the frequency domain decorrelated signal with these being interfaced using a translation neural network section.

In some embodiments, as illustrated in FIGs. 8 and 9, the structure may also include some direct connections between higher scale layers/levels of the downscale/encoder section and upscale/decoder section. Such connections may be referred to as inter-skip connections and they may typically allow for the preservation of finer signal details at the decoder side.

In some embodiments, samples of the downmix time domain audio signal may directly be fed to the trained artificial neural network, and specifically to the first layer of the first neural network section 701. However, in many embodiments, the envelope compensator 109 may comprise an envelope estimator which generates envelope samples that are samples of an envelope of the downmix time domain audio signal. These envelope samples may then be fed to the artificial neural network/first neural network section 701.

The envelope samples may for example be amplitude values for the time domain audio signal, and may in some cases be determined on a sample by sample basis and only reflect the instantaneous amplitude/envelope value. In other embodiments, the envelope samples may e.g. include some form of low pass filtering or averaging, such as over a fixed time window.

Such approaches may provide an improved compensated frequency domain decorrelated signal in many embodiments and may often allow a suitable input to be generated for evaluation by the artificial neural network.

In the particular example of FIGs. 8 and 9, the first neural network section 701 includes an envelope estimator which simply generates the envelope samples as the magnitude/absolute values of the samples of the downmix time domain audio signal. This has been found to provide a particularly advantageous operation.

However, in some embodiments, the envelope samples may include both samples of an envelope of minimum values of the downmix time domain audio signal and samples of an envelope of maximum values of the time domain audio signal. In particular, for a signal that includes both negative and positive values (such as most audio signals), the envelope samples include both samples of an envelope of positive values of the time domain audio signal and samples of an envelope of negative values of the time domain audio signal.

Thus, in some embodiments, the features generated by the first neural network section 701 may be based on and reflect both the positive and negative envelopes of the downmix time domain audio signal, i.e, instead of taking the magnitude, the conv1d-PreLU 0f layer of FIG. 8 can accept inputs corresponding to the positive and negative envelopes of the downmix time domain audio signal. This approach may in particular be advantageous if it is desired to reinstate both positive and negative envelopes in the compensated frequency domain decorrelated signal. It may be particularly suitable for signals that are not symmetric around a zero value. The envelopes may for example be computed by taking the half-wave rectified positive and negative samples and smoothing the resulting signals. The reference signals' envelopes used in training would then also be shaped accordingly with both positive and negative envelopes.

In some cases, the time domain audio signal may be at a different and specifically lower data rate than the generated output signal and/or the (equivalent) sample rate of the frequency domain signal. In some cases, the time domain audio signal may be supplemented by frequency extension data that may be used to extend a received time domain audio signal into an additional higher frequency band. For example, the time domain audio signal may be a downmix (mono) audio signal in a given frequency band/range (typically a low frequency band) and the received signal may further comprise frequency extension, such as specifically Spectral Band Replication (SBR), data that is used to increase the frequency range/interval of the frequency domain signals generated from the time domain audio signal. In such cases, the time domain audio signal may be input to the artificial neural network at the lower sample rate and with the reduced frequency bandwidth.

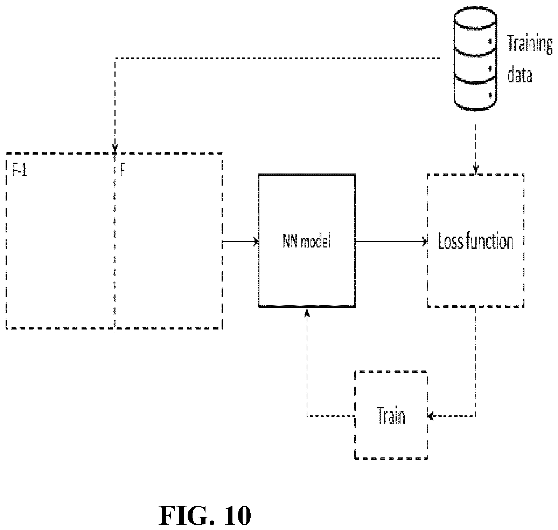

Artificial neural networks are adapted to specific purposes by a training process which is used to adapt/ tune/ modify the weights and other parameters (e.g. bias) of the artificial neural network. It will be appreciated that many different training processes and algorithms are known for training artificial neural networks. A training setup that may be used for the described artificial neural networks is illustrated in FIG. 10.

Typically, training is based on large training sets where a large number of examples of input data are provided to the network. Further, the output of the artificial neural network is typically (directly or indirectly) compared to an expected or ideal result. A cost function may be generated to reflect the desired outcome of the training process. In a typical scenario known as supervised learning, the cost (or loss) function often represents the distance between the prediction and the ground truth for a particular input data. Based on the cost function, the weights may be changed and by reiterating the process for the modified weights, the artificial neural network may be adapted towards a state for which the cost function is minimized.

Different approaches may be used to train the neural networks and in particular an overall training may seek to result in the output of the audio apparatus being a multichannel audio signal that most closely corresponds to the original multichannel audio signal. Thus, the arrangement may be trained to provide a compensated frequency domain decorrelated signal that most effectively results in accurate reconstruction of the multichannel audio signal. In such a case, a cost function based on the difference between a generated multichannel audio signal and an original training multichannel audio signal may be used.

In other cases, more specific training of an artificial neural network may be used. For example, the training of an artificial neural network of the envelope compensator 109 may be based on a cost function reflecting the difference between a compensated frequency domain decorrelated signal and a ground truth frequency domain decorrelated signal generated to have the same equivalent time domain envelope as the downmix time domain audio signal. Specifically, the generated compensated frequency domain decorrelated signal may be derived and the difference between this signal and a target frequency domain decorrelated signal with a suitable equivalent time domain envelope.

As another example, the training of an artificial neural network of the envelope compensator 109 may be based on a cost function reflecting the difference between a time domain envelope of a generated compensated frequency domain decorrelated signal and the time domain envelope of a corresponding training time domain audio signal. Specifically, sets of time domain audio signals (specifically representing downmixes of multichannel audio signals) may be provided to the audio apparatus and the resulting compensated frequency domain decorrelated signal may be determined. This signal may be converted to the time domain and a cost value reflecting the difference between the time domain envelope of the compensated frequency domain decorrelated signal and the time domain envelope of the training time domain audio signal may be determined.

In many cases, the cost value may be determined to include multiple contributions, such as for example both a cost contribution from a time domain comparison and from a frequency domain comparison.

In more detail, during a training step a neural network may have two different flows of information from input to output (forward pass) and from output to input (backward pass). In the forward pass, the data is processed by the neural network as described above while in the backward pass the weights are updated to minimize the cost function. Typically, such a backward propagation follows the gradient direction of the cost function landscape. In other words, by comparing the predicted output with the ground truth for a batch of data input, one can estimate the direction in which the cost function is minimized and propagate backward, by updating the weights accordingly. Other approaches known for training artificial neural networks include for example Levenberg-Marquardt algorithm, the conjugate gradient method, and the Newton method etc.

In the present case, training may specifically include a training set comprising a potentially large number downmix audio signals of multichannel audio signals. The training sets may include audio signals representing a number of different audio sources including e.g. recording of videos, movies, telecommunications, etc. In some embodiments, the training data may even include non-audio data such as a training being performed in combination with training data from other sources, such as text data etc.

In some embodiments, training data may be multichannel audio signals in time segments corresponding to the processing time intervals of the artificial neural networks being trained, e.g. the number of samples in a training multichannel audio signal may correspond to a number of samples corresponding to the input nodes of the artificial neural network(s) being trained. Each training example may thus correspond to one operation of the artificial neural network(s) being trained. Usually, however, a batch of training samples is considered for each step to speed up and smoothen the training process. Furthermore, many upgrades to gradient descent are possible also to speed up convergence or avoid local minima in the cost function landscape.

The training may be based on training multichannel audio signals. For each training multichannel audio signal, a training processor may perform a downmix operation to generate a downmix audio signal and corresponding upmix parametric data. Thus, the encoding process that is applied to the multichannel audio signal during normal operation (e.g. of the parametric stereo codec) may also be applied to the training multichannel audio signal thereby generating a downmix and the upmix parametric data.

In addition, the training processor may in some embodiments generate a time domain envelope signal for the training time domain audio signals.

The training downmix signals may be fed to the arrangement of the audio apparatus including the decorrelator 107 and the envelope compensator 109. An output from the neural network operation of the arrangement is then determined and a cost function is applied to determine a cost value for each training downmix audio signal and/or for the combined set of training downmix audio signals (e.g. an average cost value for the training sets is determined). The cost function may include various components.

Typically, the cost function will include at least one component that reflects how close a generated signal is to a reference signal, i.e. a so-called reconstruction error. In some embodiments the cost function will include at least one component that reflects how close a generated signal is to a reference signal from a perceptual point of view.

For example, in some embodiments, the time domain envelope for the compensated frequency domain decorrelated signal generated by the envelope compensator 109 for a given training downmix time domain audio signal/multichannel audio signal may be compared to the time domain envelope for that training downmix audio signal. The time domain envelope estimate signal may be determined by conversion to the time domain of a low pass filtered version of the signal. The resulting signals may be compared to determine the cost value. This process may be iterated over all training sets to generate an overall cost value.

Based on the cost value, the training processor may adapt the weights of the artificial neural network. For example, a back-propagation approach may be used. In particular, the training processor may adjust the weights of one or all of the artificial neural networks based on the cost value. For example, given the derivative (representing the slope) of the weights with respect to the cost function the weights values are modified to go in the direction of the slope. For a simple/minima account one can refer to the training of the perceptron (single neuron) in case of backward pass of a single data input.

The process may be iterated until the artificial neural networks are considered to be trained. For example, training may be performed for a predetermined number of iterations. As another example, training may be continued until the weights change be less than a predetermined amount. Also very common, a validation stop is implemented where the network is tested again a validation metric and stopped when reaching the expected outcome.

In some embodiments, the cost function may be arranged to reflect a difference between the training multi-channel audio signal and a multichannel audio signal generated by upmixing the downmix audio signal and the compensated frequency domain decorrelated signal. As previously mentioned, in other embodiments, the cost function may reflect differences in intermediate parameters or signals, such as the differences in the time domain envelopes of the time domain audio signal and the compensated frequency domain decorrelated signal. In some cases, the cost function may include contributions from a plurality of such comparisons.

The training approach may use a cost or loss function which determines a cost value in dependence on a difference measure between time domain envelopes of the training time domain audio signals and the time domain envelopes for the compensated frequency domain decorrelated signals generated for the training time domain audio signals.

In particular, in some embodiments, the at least one artificial neural network is trained using training data comprising a plurality of training time domain audio signals and a cost function dependent on a difference measure between time domain envelopes of the training time domain audio signals and time domain envelopes for compensated frequency domain decorrelated signals generated for the training time domain audio signals.

In some embodiments, the artificial neural network is trained using training data comprising a plurality of training time domain audio signals and a cost function dependent on a difference measure between the compensated frequency domain decorrelated signals and training frequency domain decorrelated signals having a time domain envelope matching the training time domain audio signals. The training frequency domain decorrelated signal for a given training time domain audio signal being generated to have a corresponding time domain envelope which matches/is substantially the same as the time envelope of the training time domain audio signals.

Specifically, in some embodiments, the cost/loss function may represent a reconstruction loss and consists of or include a contribution of the root mean square error between the neural network output, i.e. the compensated frequency domain decorrelated signal, and a reference decorrelator output with a correctly reinstated temporal envelope corresponding to the time domain audio signal/downmix signal. The reference signal may be computed by estimating the envelopes of both the time domain audio signal/the time-domain downmix signal and decorrelator output training samples and correcting the decorrelator output by equalizing its envelope.

If the time-domain representation of the mono downmix audio signal, i.e. the time domain audio signal, is represented as a temporally flat signal $\overline{m}[n]$ modulated by an envelope $e_m[n]$:

$$m[n] = \overline{m}[n] \cdot e_m[n]$$

The time-domain representation of the corresponding generated decorrelated signal $d[n]$ is represented as a temporally flat signal $\overline{d}[n]$ modulated by an envelope $e_d[n]$:

$$d[n] = \overline{d}[n] \cdot e_d[n]$$

The corrected decorrelator signal is then given by:

$$d_r[n] = \overline{d}[n] \cdot e_m[n] = d[n] \cdot e_m[n]/e_d[n]$$

For training, the signal $d_r[n]$ is then processed by the (complex hQMF) analysis filterbank of FIG. 2,

$$D_r[k,l] = hQMF(d_r[n])$$

to produce the reference training data. The loss function can then be given as:

$$\mathcal{L}_1(D'[k,l], D_r[k,l]) = \sqrt{\frac{1}{KL} \sum_{\{k,l\}} (D'[k,l] - D_r[k,l])^2}$$

As another example of a loss function, the RMSE (root Mean Square Error) of the frequency domain (hQMF) signal magnitudes can be used:

$$\mathcal{L}_2(D'[k,l], D_r[k,l]) = \sqrt{\frac{1}{KL} \sum_{\{k,l\}} (|D'[k,l]| - |D_r[k,l]|)^2}$$

This loss function disregards the phase information from the filter bank/time domain to frequency transform. However, differences in phase tend to not result in perceptual differences. Typically, the previous two loss functions are weighed and summed to produce an aggregate loss function, such as:

$$\mathcal{L}(D'[k,l], D_r[k,l]) = \alpha_1 \mathcal{L}_1(D'[k,l], D_r[k,l]) + \alpha_2 \mathcal{L}_2(D'[k,l], D_r[k,l]),$$

where $\alpha_1$ and $\alpha_2$ are scalars that can be determined during a hyper-parameter tuning step and control reconstruction and perceptual components.

The audio apparatus(s) may specifically be implemented in one or more suitably programmed processors. In particular, the artificial neural networks may be implemented in one more such suitably programmed processors. The different functional blocks, and in particular the artificial neural networks, may be implemented in separate processors and/or may e.g. be implemented in the same processor. An example of a suitable processor is provided in the following.

The training sets may thus easily and simply be generated from training multichannel audio signal by processing these to generate training downmix audio signals and by determining reference (ground truth) data from the multichannel audio signals. The training can be performed using any suitable approach and indeed can typically be based on any kind of multichannel audio signals. In many cases, it may be advantageous to include training multichannel audio signals representing different types of audio sources and/or with different characteristics. However, it will be appreciated that no particular requirements are imposed by the approach on the training sets and that in principle any collection of multi-channel audio signal or signals derived therefrom may be used.

For example, training data may be generated as synthetically corrected audio data using the above indicated process. Specifically, for a multichannel audio signal being a stereo signal and the downmix time domain audio signal being a mono signal, the following approach may be used:

1) From each stereo signal (of a potentially large set/database), a mono downmix time domain audio signal can be determined (e.g. simply as $m[n] = 0.5*(l[n] + r[n])$.

2) The resulting downmix time domain audio signal can be decorrelated using a known decorrelation process $D\{.\}$, e.g., $d[n] = D\{m[n]\}$, where decorrelation may include analysis and synthesis filter banks as is well-known to the skilled person.

3) The (time domain) envelopes of $m[n]$ and $d[n]$ can be determined.

4) The envelope-adjusted ground truth can then be determined as described above.

5) The frequency domain signals $D[k,l]$ and $D'[k,l]$ for the uncompensated and compensated signals are then determined.

6) The generated signals are then divided into frames and the resulting training audio sets can be used to train the neural network(s).

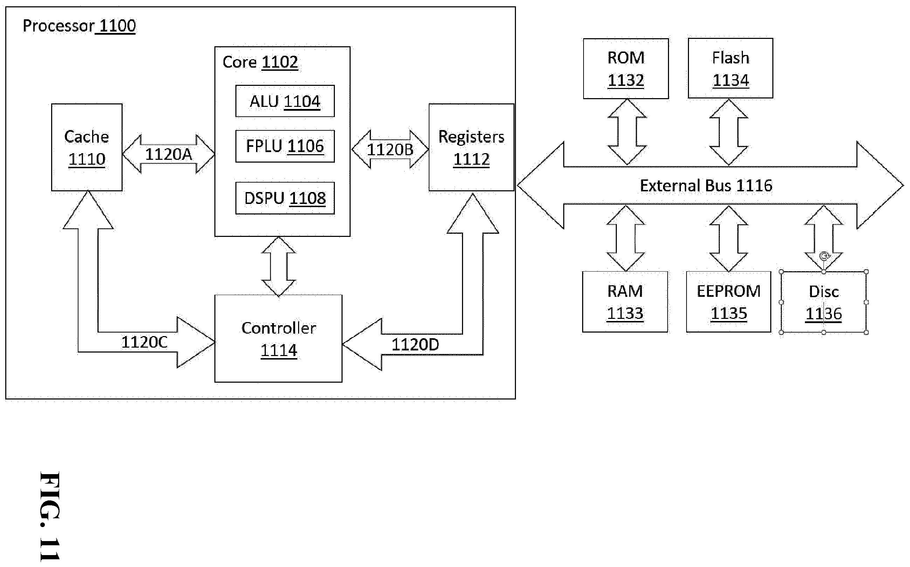

FIG. 11 is a block diagram illustrating an example processor 1100 according to embodiments of the disclosure. Processor 1100 may be used to implement one or more processors implementing an apparatus as previously described or elements thereof (including in particular one more artificial neural network). Processor 1100 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 1100 may include one or more cores 1102. The core 1102 may include one or more Arithmetic Logic Units (ALU) 1104. In some embodiments, the core 1102 may include a Floating Point Logic Unit (FPLU) 1106 and/or a Digital Signal Processing Unit (DSPU) 1108 in addition to or instead of the ALU 1104.

The processor 1100 may include one or more registers 1112 communicatively coupled to the core 1102. The registers 1112 may be implemented using dedicated logic gate circuits (e.g., flip-flops) and/or any memory technology. In some embodiments the registers 1112 may be implemented using static memory. The register may provide data, instructions and addresses to the core 1102.

In some embodiments, processor 1100 may include one or more levels of cache memory 1110 communicatively coupled to the core 1102. The cache memory 1110 may provide computer-readable instructions to the core 1102 for execution. The cache memory 1110 may provide data for processing by the core 1102. In some embodiments, the computer-readable instructions may have been provided to the cache memory 1110 by a local memory, for example, local memory attached to the external bus 1116. The cache memory 1110 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 1100 may include a controller 1114, which may control input to the processor 1100 from other processors and/or components included in a system and/or outputs from the processor 1100 to other processors and/or components included in the system. Controller 1114 may control the data paths in the ALU 1104, FPLU 1106 and/or DSPU 1108. Controller 1114 may be implemented as one or more state machines, data paths and/or dedicated control logic. The gates of controller 1114 may be implemented as standalone gates, FPGA, ASIC or any other suitable technology.

The registers 1112 and the cache 1110 may communicate with controller 1114 and core 1102 via internal connections 1120A, 1120B, 1120C and 1120D. Internal connections may be implemented as a bus, multiplexer, crossbar switch, and/or any other suitable connection technology.

Inputs and outputs for the processor 1100 may be provided via a bus 1116, which may include one or more conductive lines. The bus 1116 may be communicatively coupled to one or more components of processor 1100, for example the controller 1114, cache 1110, and/or register 1112. The bus 1116 may be coupled to one or more components of the system.

The bus 1116 may be coupled to one or more external memories. The external memories may include Read Only Memory (ROM) 1132. ROM 1132 may be a masked ROM, Electronically Programmable Read Only Memory (EPROM) or any other suitable technology. The external memory may include Random Access Memory (RAM) 1133. RAM 1133 may be a static RAM, battery backed up static RAM, Dynamic RAM (DRAM) or any other suitable technology. The external memory may include Electrically Erasable Programmable Read Only Memory (EEPROM) 1135. The external memory may include Flash memory 1134. The External memory may include a magnetic storage device such as disc 1136. In some embodiments, the external memories may be included in a system.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

**Claims**

1.    An apparatus for generating an output multichannel audio signal, the apparatus comprising:

a receiver (101) arranged to receive a frequency domain audio signal and a time domain audio signal, the frequency domain audio signal being a frequency domain representation of a downmix of a multichannel audio signal and the time domain audio signal being a time domain representation of the downmix of the multichannel audio signal;
a decorrelator (107) arranged to generate a frequency domain decorrelated signal by applying a decorrelation to the frequency domain audio signal;
an envelope compensator (109) arranged to generate an envelope compensated frequency domain decorrelated signal by applying a time domain envelope compensation to the frequency domain decorrelated signal, the time domain envelope compensation reducing a difference between a time domain envelope of the downmix of a multichannel audio signal and a time domain envelope of the frequency domain decorrelated signal, the envelope compensator (109) comprising a trained artificial neural network having input values determined from the time domain audio signal and from the frequency domain decorrelated signal and generating values of the envelope compensated frequency domain decorrelated signal; and
an output generator (105) arranged to generate the output multichannel audio signal by upmixing from the frequency domain audio signal and the envelope compensated frequency domain decorrelated signal.

2.    The apparatus of claim 1 wherein the trained artificial neural network comprises a first neural network section (701) arranged to receive input values determined from the time domain audio signal and to generate a set of feature values; and a second neural network section (703) arranged to receive the set of feature values and input values determined from the frequency domain decorrelated audio signal.

3.    The apparatus of claim 2 wherein the second neural network section (703) comprises a downscale section followed by an upscale section, and the set of feature values adapt values of the downscale section.

4.    The apparatus of claim 2 or 3 wherein the envelope compensator is arranged to condition output values of at least one layer of the second neural network section in dependence of the set of feature values.

5.    The apparatus of any of the claims 2 to 4 wherein the envelope compensator (109) is arranged to adapt values of at least a first layer and a second layer of the second neural network sector (703) dependent on the set of feature values.

6.    The apparatus of claim 5 wherein the first layer and the second layer have different temporal resolutions.

7. The apparatus of claim 5 or 6 wherein the envelope compensator (109) comprises a first feature translation neural network section (801) comprising at least one layer for generating a first translated set of feature values from the set of feature values and a second feature translation neural network section (801) comprising at least one layer for generating a second translated set of feature values from the set of feature values; and the envelope compensator (109) is arranged to adapt values of the first layer in dependence on the first translated set of feature values and to adapt values of the second layer in dependence on the second translated set of feature values.

8. The apparatus of claim 7 wherein the trained artificial neural network comprises a pooling operation for the set of feature values between the first feature translation neural network section and the second feature translation neural network section.

9. The apparatus of wherein the trained artificial neural network is a multiscale artificial neural network.

10. The apparatus of any previous claim wherein the envelope compensator (109) comprises an envelope estimator arranged to generate envelope samples being samples of an envelope of the time domain audio signal and wherein the input values to the trained artificial neural network include the envelope samples.

11. The apparatus of claim 10 wherein the envelope samples include both samples of an envelope of minimum values of the time domain audio signal and samples of an envelope of maximum values of the time domain audio signal.

12. The apparatus of any previous claim wherein the trained artificial neural network is trained using training data comprising a plurality of training time domain audio signals and a cost function dependent on a difference measure between the compensated frequency domain decorrelated signals and training frequency domain decorrelated signals having a time domain envelope matching the training time domain audio signals.

13. The apparatus of any of the previous claims wherein the trained artificial neural network comprises at least one convolutional layer receiving samples of the time domain audio signal and at least one convolutional layer receiving samples of the frequency domain decorrelated signal.

14. A method of generating an output multichannel audio signal, the method comprising:

receiving a frequency domain audio signal and a time domain audio signal, the frequency domain audio signal being a frequency domain representation of a downmix of a multichannel audio signal and the time domain audio signal being a time domain representation of the downmix of the multichannel audio signal;
generating a frequency domain decorrelated signal by applying a decorrelation to the frequency domain audio signal;
generating an envelope compensated frequency domain decorrelated signal by applying a time domain envelope compensation to the frequency domain decorrelated signal, the time domain envelope compensation reducing a difference between a time domain envelope of the downmix of a multichannel audio signal and a time domain envelope of the frequency domain decorrelated signal, the envelope compensator (109) comprising a trained artificial neural network having input values determined from the time domain audio signal and from the frequency domain decorrelated signal and generating values of the envelope compensated frequency domain decorrelated signal; and
generating the output multichannel audio signal by upmixing from the frequency domain audio signal and the envelope compensated frequency domain decorrelated signal.

15. A computer program product comprising computer program code means adapted to perform all the steps of claim 14 when said program is run on a computer.

**FIG. 1**

FIG. 2

**301** **303** **305** **307**

**FIG. 3**

$$l = \max\left(0, \sum_n w_n x_n\right)$$

**FIG. 4**

**FIG. 5**

**FIG. 6**

$m[n]$ → [ 1st NN ] 701

[ 2nd NN ] 703

$D[k, l]$ → → $D'[k, l]$

FIG. 7

**FIG. 8**

**FIG. 9**

703

**FIG. 10**

**FIG. 11**

Europäisches
Patentamt

European
Patent Office

Office européen
des brevets

## EUROPEAN SEARCH REPORT

**Application Number**

EP 24 16 4431

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/239473 A1 (KJORLING KRISTOFER [SE] ET AL) 26 October 2006 (2006-10-26) <br> * paragraph [0011] * <br> * paragraph [0060] - paragraph [0076]; figures 1a,2a * <br> * paragraph [0087] - paragraph [0090]; figure 4a * <br> * paragraph [0099] - paragraph [0102] * <br> * paragraph [0121] - paragraph [0125]; figures 7a,7b * <br> * claims 1,2,15,4 * | 1-15 | INV. <br> G10L19/008 <br> H04S1/00 <br> H04S3/00 <br> H04S7/00 <br><br> ADD. <br> G06N3/02 |
| A | US 2009/319282 A1 (ALLAMANCHE ERIC [DE] ET AL) 24 December 2009 (2009-12-24) <br> * paragraph [0101] - paragraph [0126]; figures 10-16 * | 1-15 | |
| A | US 2020/221242 A1 (KIM KICHUL [KR] ET AL) 9 July 2020 (2020-07-09) <br> * paragraph [0316] - paragraph [0432]; figure 10 * | 1-15 | |
| A | ANEMULLER CARLOTTA ET AL: "A Data-Driven Approach to Audio Decorrelation", IEEE SIGNAL PROCESSING LETTERS, IEEE, USA, vol. 29, 24 November 2022 (2022-11-24), pages 2477-2481, XP011930190, ISSN: 1070-9908, DOI: 10.1109/LSP.2022.3224833 [retrieved on 2022-11-25] <br> * Page 2477, section I. * <br> * Pages 2478-2479, section III. * | 1-15 | TECHNICAL FIELDS SEARCHED (IPC) <br><br> G10L <br> H04S <br> G06N |
| A | US 2009/234657 A1 (TAKAGI YOSHIAKI [JP] ET AL) 17 September 2009 (2009-09-17) <br> * paragraph [0053] - paragraph [0074]; figure 5 * | 1-15 | |

-/--

The present search report has been drawn up for all claims

| Place of search | Date of completion of the search | Examiner |
|---|---|---|
| Munich | 9 July 2024 | Virette, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 16 4431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/189481 A1 (FRAUNHOFER GES FORSCHUNG [DE]; UNIV FRIEDRICH ALEXANDER ER [DE]) 15 September 2022 (2022-09-15) * page 7, line 13 - page 8, line 7; figure 1 * * page 10, line 4 - page 10, line 25; figure 2 * * page 18, line 14 - page 20, line 31; figures 9,10 * ----- | 1-15 | |

TECHNICAL FIELDS
SEARCHED      (IPC)

The present search report has been drawn up for all claims

| Place of search | Date of completion of the search | Examiner |
|---|---|---|
| Munich | 9 July 2024 | Virette, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                                  
& : member of the same patent family, corresponding
    document

EPO FORM 1503 03.82 (P04C01)

# EP 4 576 072 A1

## ANNEX TO THE EUROPEAN SEARCH REPORT
## ON EUROPEAN PATENT APPLICATION NO.

EP 24 16 4431

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2024

| Patent document cited in search report | | Publication date | Patent family member(s) | | Publication date |
|---|---|---|---|---|---|
| US 2006239473 | A1 | 26-10-2006 | AT | E421845 T1 | 15-02-2009 |
| | | | CN | 101138274 A | 05-03-2008 |
| | | | CN | 102163429 A | 24-08-2011 |
| | | | EP | 1829424 A1 | 05-09-2007 |
| | | | HK | 1118168 A1 | 30-01-2009 |
| | | | HK | 1160980 A1 | 17-08-2012 |
| | | | JP | 4804532 B2 | 02-11-2011 |
| | | | JP | 2008536183 A | 04-09-2008 |
| | | | KR | 20070102738 A | 19-10-2007 |
| | | | MY | 144377 A | 15-09-2011 |
| | | | TW | I338446 B | 01-03-2011 |
| | | | US | 2006239473 A1 | 26-10-2006 |
| | | | WO | 2006108543 A1 | 19-10-2006 |
| US 2009319282 | A1 | 24-12-2009 | AT | E413792 T1 | 15-11-2008 |
| | | | AU | 2005299070 A1 | 04-05-2006 |
| | | | BR | PI0516392 A | 02-09-2008 |
| | | | CA | 2583146 A1 | 04-05-2006 |
| | | | CN | 101044794 A | 26-09-2007 |
| | | | CN | 101853660 A | 06-10-2010 |
| | | | EP | 1803325 A1 | 04-07-2007 |
| | | | ES | 2317297 T3 | 16-04-2009 |
| | | | HK | 1104412 A1 | 11-01-2008 |
| | | | IL | 182235 A | 31-10-2011 |
| | | | JP | 4625084 B2 | 02-02-2011 |
| | | | JP | 2008517334 A | 22-05-2008 |
| | | | KR | 20070061882 A | 14-06-2007 |
| | | | NO | 339587 B1 | 09-01-2017 |
| | | | PL | 1803325 T3 | 30-04-2009 |
| | | | PT | 1803325 E | 13-02-2009 |
| | | | RU | 2384014 C2 | 10-03-2010 |
| | | | TW | I330827 B | 21-09-2010 |
| | | | US | 2006085200 A1 | 20-04-2006 |
| | | | US | 2009319282 A1 | 24-12-2009 |
| | | | WO | 2006045373 A1 | 04-05-2006 |
| US 2020221242 | A1 | 09-07-2020 | CN | 111432273 A | 17-07-2020 |
| | | | EP | 3680897 A1 | 15-07-2020 |
| | | | KR | 20200086064 A | 16-07-2020 |
| | | | US | 2020221242 A1 | 09-07-2020 |
| | | | WO | 2020145659 A1 | 16-07-2020 |
| US 2009234657 | A1 | 17-09-2009 | CN | 101253556 A | 27-08-2008 |
| | | | EP | 1921606 A1 | 14-05-2008 |
| | | | JP | 4918490 B2 | 18-04-2012 |
| | | | JP | WO2007026821 A1 | 26-03-2009 |

EPO FORM P0459

For more details about this annex : see Official Journal of the European Patent Office, No. 12/82

page 1 of 2

35

**ANNEX TO THE EUROPEAN SEARCH REPORT
ON EUROPEAN PATENT APPLICATION NO.**

EP 24 16 4431

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2024

| Patent document cited in search report | Publication date | Patent family member(s) | | Publication date |
|---|---|---|---|---|
| | | KR | 20080039463 A | 07-05-2008 |
| | | US | 2009234657 A1 | 17-09-2009 |
| | | WO | 2007026821 A1 | 08-03-2007 |
| WO 2022189481 A1 | 15-09-2022 | AU | 2022233253 A1 | 21-09-2023 |
| | | BR | 112023018021 A2 | 03-10-2023 |
| | | CA | 3211264 A1 | 15-09-2022 |
| | | EP | 4305617 A1 | 17-01-2024 |
| | | JP | 2024510177 A | 06-03-2024 |
| | | KR | 20230160840 A | 24-11-2023 |
| | | TW | 202242851 A | 01-11-2022 |
| | | US | 2023421979 A1 | 28-12-2023 |
| | | WO | 2022189481 A1 | 15-09-2022 |

EPO FORM P0459

For more details about this annex : see Official Journal of the European Patent Office, No. 12/82

page 2 of 2

## REFERENCES CITED IN THE DESCRIPTION

**Non-patent literature cited in the description**

- **E. SCHUIJERS** ; **W. OOMEN** ; **B. DEN BRINKER** ; **J. BREEBAART**. Advances in Parametric Coding for High-Quality Audio. *114th AES Convention, Amsterdam, The Netherlands*, 2003
- **E. SCHUIJERS** ; **J. BREEBAART** ; **H. PUMHAGEN** ; **J. ENGDEGÅRD**. Low Complexity Parametric Stereo Coding. *116th AES, Berlin, Germany*, 2004

- **XAVIER GLOROT** ; **ANTOINE BORDES** ; **YOSHUA BENGIO**. *Proceedings of the Fourteenth International Conference on Artificial Intelligence and Statistics, PMLR*, 2011, vol. 15, 315-323
- **OORD, AARON VAN DEN** ; **SANDER DIELEMAN** ; **HEIGA ZEN** ; **KAREN SIMONYAN** ; **ORIOL VINYALS** ; **ALEX GRAVES** ; **NAL KALCHBRENNER** ; **ANDREW SENIOR** ; **KORAY KAVUKCUOGLU**. Wavenet: A generative model for raw audio. *arXiv: 1609.03499*, 2016